# EUROPÄISCHE PATENTSCHRIFT

(11) **EP 3 312 147 B1**
(45) Veröffentlichungstag und Bekanntmachung des Hinweises auf die Patenterteilung: **04.03.2020**
(21) Anmeldenummer: 17192270.1
(22) Anmeldetag: 21.09.2017
(51) Int. Cl.: C03C 17/00, B41M 5/00, C03C 17/32, F24C 15/06, F24C 15/12

(54) **VERFAHREN ZUR HERSTELLUNG EINER DEKORBLENDE**
METHOD FOR MANUFACTURING A DECORATIVE COVER
PROCÉDÉ DE FABRICATION D'UN ÉCRAN DÉCORATIF

(30) Priorität: 21.10.2016 US 201662411215 P; 21.10.2016 US 201662411234 P
(43) Veröffentlichungstag der Anmeldung: 25.04.2018
(73) Patentinhaber: Schott AG, 55122 Mainz (DE); Schott Gemtron Corporation, Sweetwater, TN 37874 (US)
(72) Erfinder: SCHWABE, Carsten, 56412 Horbach (DE); O'RYAN, Adam, Sweetwater, TN Tennessee 37874 (US); MASON, Grant, Barrie, Ontario L4N 3M4 (CA)
(74) Vertreter: Blumbach · Zinngrebe Patentanwälte PartG mbB

(56) Entgegenhaltungen:
- EP-A1- 1 364 924
- EP-A1- 1 645 550
- WO-A1-2005/003048
- WO-A1-2016/008848
- DE-A1-102005 013 884

## Beschreibung

Die vorliegende Erfindung betrifft ein Verfahren zur Herstellung einer Dekorblende aus Flachglas.

Eine Dekorblende ist primär ein Teil einer äußeren Verkleidung eines Gegenstandes, der sowohl einen gewünschten ästhetischen Eindruck als auch eine technische Funktionalität des Gegenstandes bewirken soll. Zu solchen technischen Funktionalitäten zählen beispielsweise der Schutz des verkleideten Gegenstandes vor schädlichen äußeren Einflüssen, die Reflexion oder Absorption elektromagnetischer Strahlung, eine erleichterte Reinigung oder eine Bedienung des Gegenstandes durch den Bediener. Viele dieser Funktionalitäten werden erst durch eine entsprechende Beschichtung oder Bedruckung ermöglicht. Dekorblenden der vorgenannten Art finden typischerweise im Haushaltsbereich Anwendung, sei es als Bedienblende oder Frontscheibe für ein Haushaltsgerät wie Kochfeld, Backofen, Waschmaschine etc. oder sei es als Blende eines Möbelstücks. Gerade für Haushaltsgeräte gilt, dass die Anforderungen an die chemische, mechanische und thermische Beständigkeit von Dekorblenden sehr anspruchsvoll sind, da bei deren Betrieb beispielsweise in zyklischem Wechsel hohe Temperaturen, hohe Luftfeuchtigkeit bis hin zu heißem Wasserdampf oder andere aggressive Chemikalien wie Reinigungsmittel oder heiße Fette auftreten können. Die zentrale Anforderung an jede Bedruckung einer Dekorblende ist somit ihre Haftung auf der Dekorblende unter widrigen Bedingungen, da ein Versagen der Haftung in jedem Fall mit einem vollständigen Ausfall der entsprechenden Funktionalität einhergeht. Entsprechende Testbedingungen lassen sich den einschlägigen ISO-Normen entnehmen, zum Beispiel bezüglich Haftungstests, Widerstandsfähigkeit gegenüber Flüssigkeiten und Luftfeuchtigkeit, Einfluss von Hitze, Bewertung der Degradation von Beschichtungen, oder Widerstandsfähigkeit gegenüber Abrieb.

Da zusätzlich das Design dieser Gegenstände des Haushaltsbereiches starken modischen Strömungen unterworfen ist und ein Trend zur Integration einer steigenden Zahl unterschiedlicher Funktionalitäten vorherrscht, wirkt sich dies auch auf die Gestaltung der zugehörigen Dekorblenden sowie auf die dafür benötigten Herstellungsverfahren aus.

So wird in der EP 1 645 550 A1 eine Dekorblende mit metallischer Anmutung beschrieben, wobei die betriebliche Rückseite des entsprechenden Trägers eine Dekorfunktionsschicht aufweist. Über dieser Dekorfunktionsschicht ist eine metallische Schicht aufgebracht. Durch diese Anordnung auf der betrieblichen Rückseite wird eine fronseitig glatte Oberfläche der Dekorblende gewährleistet.

Die EP 1 3 64 924 A1 beschreibt ebenfalls Dekorblenden mit einer metallischen Anmutung, wobei die Dekorblenden eine kratzfeste, transluzente Frontflächenbeschichtung sowie eine metallische Rückseitenbeschichtung aufweist.

Unter den funktionellen Bedruckungen nehmen die elektrisch leitfähigen Bedruckungen dabei eine besonders bedeutsame Position ein. Leitfähige Flächen und Linien, die auf eine Dekorblende aufgebracht werden, dienen dabei immer häufiger als integrierte kapazitive Sensoren für berührungsempfindliche Schalter. Im Stand der Technik werden solche Bedruckungen mittels Siebdruck unter Verwendung von Glasfritte und mehreren Mikrometer großen Silberflocken auf Dekorblenden aus Glas aufgebracht und während dem thermischen Vorspannen des Glases auf der Oberfläche eingebrannt. Die so hergestellten emailartigen Schichten weisen aufgrund ihrer relativ großen Schichtdicke und der beim Einbrennen entstehenden vorteilhaften Mikrostruktur einen niedrigen elektrischen Widerstand und damit verbunden eine hohe Sensitivität für kapazitive berührungsempfindliche Schalter auf.

Derzeit ist der Markt für Dekorblenden geprägt durch eine Entwicklung zu kleineren Losgrößen bei einer gleichzeitig höheren Vielfalt an Produktvarianten mit einer größeren Komplexität der darzustellenden Dekore und Funktionalitäten. Hierbei werden zunehmend die üblicherweise lediglich schwarz-weiß ausgeprägten Dekore um farbliche Elemente, vor allem für Beschriftungen und Symbole, erweitert. Funktionalitäten beinhalten zusätzlich zu den bereits genannten beispielsweise berührungsempfindliche Sensoren, hinterleuchtbare Elemente, Displayfähigkeit oder Schutzbeschichtungen gegen mechanische, chemische oder thermische Belastung.

Gemäß dem Stand der Technik werden derartige Blenden durch Aufbringen mehrerer dekorativer und funktioneller Schichten im Siebdruckverfahren hergestellt. So beschreibt die DE 10 2005 013 884 A1 ein Verfahren zur Herstellung einer Bedienblende, bei dem mittels Siebdruck dekorative sowie elektrisch leitfähige Schichten auf einen Grundkörper aus Glas aufgebracht und anschließend bei Temperaturen von 600 bis 700°C eingebrannt werden. Hierfür enthalten sowohl die farbigen als auch die leitfähigen Siebdruckpasten Glasfritte, wobei als Farbpigmente anorganische Partikel, beispielsweise aus Eisenoxiden, Chromoxiden oder Spinellen und als leitfähiges Material Silberpartikel zum Einsatz kommen. Auf diese Weise hergestellte emailartige Bedruckungen weisen unter anderem eine hervorragende Haftung auf dem Glas sowie eine sehr gute Beständigkeit gegenüber thermischer und chemischer Belastung auf.

Da beim Siebdruck jedoch für jede aufzubringende Farbe beziehungsweise jedes funktionelle Material ein spezielles Sieb sowie ein separater Prozessschritt benötigt werden und zusätzlich zwischen dem Aufbringen einzelner Schichten thermische Trocknungsschritte erfolgen müssen, ist die Herstellung komplexer Dekorblenden bei geringen Stückzahlen wirtschaftlich nicht möglich.

Vor diesem Hintergrund ist es Aufgabe der vorliegenden Erfindung, ein den aufgeführten Anforderungen genügendes Verfahren zum Herstellen einer Dekorblende aus Flachglas für elektronische Haushaltsgeräte, insbesondere ortsfeste Haushaltsgroßgeräte wie Backöfen, Waschmaschinen oder Geräte für Heizungsanlagen bereitzustellen.

Die Erfindung löst diese Aufgabe mit den Merkmalen des unabhängigen Anspruchs. Vorteilhafte Ausgestaltungen und Weiterbildungen der Erfindung sind in den abhängigen Ansprüchen angegeben.

Bei der Erfindung handelt es sich um ein Verfahren zum Herstellen einer Dekorblende, die eine betriebliche Vorderseite sowie eine betriebliche Rückseite aufweist. Dieses Verfahren umfasst in der angegebenen Reihenfolge zumindest das Bereitstellen eines Flachglases, das Herstellen eines Dekorblendenrohlings durch formgebende Bearbeitung des bereitgestellten Flachglases mit wenigstens einem der Schritte Formen der Außenkontur der Dekorblende, Bearbeitung der Kanten oder Anfertigen wenigstens einer Vertiefung oder Aufwölbung auf der betrieblichen Vorderseite, das thermische Vorspannen des hergestellten Dekorblendenrohlings sowie das Aufbringen wenigstens einer dekorativen Bedruckung auf der betrieblichen Rückseite des thermisch vorgespannten Dekorblendenrohlings mittels eines digitalen Druckverfahrens.

Unter einer Dekorblende ist erfindungsgemäß ein Teil einer äußeren Verkleidung eines Gegenstandes zu verstehen, der sowohl einen gewünschten ästhetischen Eindruck als auch eine technische Funktionalität bewirkt.

Unter der betrieblichen Vorderseite einer Dekorblende ist dabei die im eingebauten Zustand außenliegende Seite zu verstehen. Unter der betrieblichen Rückseite ist entsprechend die im eingebauten Zustand innenliegende Seite zu verstehen. Die betriebliche Vorderseite ist entsprechend gegenüber äußeren mechanischen Einwirkungen während ihrer Verwendung exponiert. Die betriebliche Rückseite ist dagegen von derartigen Einwirkungen abgewendet und somit geschützt.

Unter dem Begriff Flachglas ist Glas in Form einer flachen Scheibe, unabhängig von dessen Herstellverfahren zu verstehen. Zu solchen Herstellverfahren zählen beispielsweise das Floaten, Walzen, Ziehen oder Gießen.

Unter dem Begriff Dekorblendenrohling ist ein formgebend bearbeitetes Flachglas zu verstehen, dessen Form aufgrund der Bearbeitung derjenigen der Dekorblende entspricht. In diesem Sinne ist ein Dekorblendenrohling nicht notwendiger Weise eine flache Scheibe, da er durch Biegen, Aufwölben oder ähnliche formgebende Schritte bearbeitet sein kann.

Unter dem Begriff Vertiefung sind sowohl zylindrische oder konische Vertiefungen zu verstehen, die mittels eines Bohr- oder Gravierverfahrens angefertigt werden, als auch solche Vertiefungen, die mittels Schleifen und Polieren angefertigt werden, wie zum Beispiel sphärische Vertiefungen oder Rillen. Bohrungen können dabei in Form von Durchgangsöffnungen durch die gesamte Tiefe des Glases hindurch gehen oder in Form von Sacklöchern eine Tiefe aufweisen, die geringer als die Dicke des Glases ist. Vertiefungen, die durch Schleifen und Polieren angefertigt werden, weisen in der Regel eine Tiefe auf, die geringer als die Dicke des Glases ist.

Unter dem Begriff dekorative Bedruckung ist eine mittels eines Druckverfahrens hergestellte, lateral strukturierte Beschichtung zu verstehen, die aufgrund ihrer optischen Eigenschaften, im speziellen aufgrund von Absorption, Reflexion oder Streuung, mit dem bloßen Auge sichtbar ist. In diesem Sinne umfasst der Begriff dekorative Bedruckung unter anderem sowohl ästhetische Verzierungen als auch die Darstellung von Schriftzeichen oder Symbolen. Eine dekorative Bedruckung kann auch mit weiteren technischen Mitteln wie einer Hinterleuchtung oder einer Anzeigeeinrichtung gezielt zusammenwirken.

Unter digitalen Druckverfahren sind solche Druckverfahren zu verstehen, die elektronisch vorliegende Druckdateien ohne Verwendung einer physikalischen Druckform wie einem Sieb oder einem Klischee auf einen Bedruckstoff aufdrucken können. Hierzu zählen unter anderem Tintenstrahldruck, Laserdruck und Aerosoljetdruck.

Vor dem thermischen Vorspannen ist es erfindungsgemäß notwendig, das bereitgestellte Flachglas in wenigstens einem Prozessschritt formgebend zu bearbeiten, um hieraus einen Dekorblendenrohling herzustellen. Zu den dafür in Frage kommenden Prozessen zählen beispielsweise das Zuschneiden des Flachglases mittels Laserschneiden, Wasserstrahlschneiden oder mechanischem Schneiden zum Formen der Außenkontur der Dekorblende. Die Kanten an der Außenkontur der Dekorblende können beispielsweise mittels Schleifen und Polieren entgratet und in eine gewünschte Form wie beispielsweise einen C-Schliff gebracht werden. Hierdurch können Verletzungen an den Schnittkanten des Glases vermieden und der Einbau in ein Haushaltsgerät vereinfacht werden. Ebenfalls mittels Wasserstrahl- oder beispielsweise mittels Diamantbohr- oder Lasergravurverfahren können zylindrische oder konische Bohrungen angefertigt werden. Weiterhin können auf der betrieblichen Vorderseite der Dekorblende sphärische Vertiefungen, Rillen oder ähnliche Vertiefungen mittels Schleifen und Polieren angefertigt werden. Durch geeignete Bestrahlung mit Lasern lassen sich an der Oberfläche des Flachglases Aufwölbungen herstellen. Sowohl die Vertiefungen als auch die Aufwölbungen können beispielsweise zur haptischen Interaktion mit einem Benutzer der Dekorblende dienen.

Diese formgebenden Prozessschritte können erfindungsgemäß in unterschiedlichen Reihenfolgen und Kombinationen einzeln oder mehrfach angewendet werden. Auch weitere dem Fachmann bekannte Verfahren können zum Einsatz kommen. Alle diese Prozessschritte haben gemeinsam, dass sie vor dem thermischen Vorspannen des Dekorblendenrohlings zu erfolgen haben, da sie nach dem thermischen Vorspannen den Rohling zerstören würden.

Der erfindungsgemäße Verfahrensschritt des thermischen Vorspannens dient zur Ausgestaltung der Dekorblende als Einscheibensicherheitsglas und erhöht somit die Sicherheit des Benutzers im Betrieb des Haushaltsgerätes, das die Dekorblende enthält. Hierfür wird der Dekorblendenrohling auf Temperaturen oberhalb der Transformationstemperatur des Flachglases erhitzt und anschließend rasch abgekühlt. Aufgrund der geringen thermischen Leitfähigkeit des Glases sinkt die Temperatur an der Oberfläche des Glases schneller als im Kern, wodurch an der Oberfläche Druckspannungen und im Kern Zugspannungen entstehen, die das Glas stabilisieren. Im Falle der Zerstörung des Glases durch eine mechanische Krafteinwirkung zerspringt derart vorgespanntes Glas in eine Vielzahl sehr kleiner Bruchstücke, sodass die Verletzungsgefahr durch die Bruchstücke gegenüber großen Scherben deutlich reduziert ist.

Da beim Digitaldruck keine statischen Druckformen verwendet werden, entfallen die damit verbundenen Kosten und Zeitaufwände für Herstellung, Lieferung, Lagerung und Umrüstung. Der Wegfall von Druckformen bewirkt weiterhin, dass die verwendeten Farben beziehungsweise funktionellen Materialien effizienter aufgebracht werden können, da auf Druckformen immer Materialrückstände zurückbleiben, die nach dem Druckvorgang entsorgt werden müssen.

Die dekorative Bedruckung mittels eines digitalen Druckverfahrens wird auf der betrieblichen Rückseite der Dekorblende aufgebracht, um sie vor mechanischen und chemischen Einflüssen wie beispielsweise Reinigungsmitteln zu schützen.

Bei der Erfindung handelt es sich bei dem verwendeten Flachglas um ein Kalk-Natron-Glas, dessen Dicke 2 mm bis 8 mm, bevorzugt 3 mm bis 6 mm beträgt. Unter Kalk-Natron-Glas ist ein Glas zu verstehen, das als Hauptbestandteil einen Massenanteil auf Oxidbasis von 70-76 Gew.-% SiO₂, 11 -17 Gew.-% Na₂O sowie 8-16 Gew.-% CaO aufweist und das sich durch eine Transformationstemperatur von weniger als 600°C auszeichnet. Dies ist vor allem für den thermischen Vorspannprozess energetisch und damit auch wirtschaftlich vorteilhaft.

Glasdicken unterhalb von 2 mm sind nicht für das thermische Vorspannen in industriellen Produktionsanlagen geeignet, da hierfür extrem hohe Kühlraten benötigt würden, die großtechnisch schwierig zu realisieren sind. Ab Glasdicken von mindestens 3 mm lassen sich Kalk-Natron-Gläser unter vergleichsweise geringem Aufwand und mit hoher Ausbeute thermisch vorspannen. Glasdicken oberhalb von 8 mm weisen eine große Einbautiefe und ein hohes Gewicht auf. Demgegenüber werden bevorzugt Gläser mit Dicken von höchstens 6 mm, die eine Massenbelegung von maximal 15 kg/m² aufweisen, verwendet.

In einer weiteren bevorzugten Weiterbildung handelt es sich bei dem verwendeten Flachglas um ein im Floatverfahren hergestelltes Flachglas. Solches gefloatetes Flachglas weist eine Atmosphärenseite, die während des Floatverfahrens nicht mit dem Zinnbad in Kontakt ist und eine Zinnseite, die während des Floatverfahrens mit dem Zinnbad in Kontakt ist, auf. Die Erfinder haben herausgefunden, dass bei Verwendung von gefloatetem Flachglas eine Bedruckung auf der Atmosphärenseite des Flachglases eine besonders vorteilhafte Haftung aufweist. Bevorzugt wird deshalb bei Verwendung von gefloatetem Flachglas die Atmosphärenseite des Glases auf der betrieblichen Rückseite der Dekorblende angeordnet.

Weiterhin haben die Erfinder überraschenderweise festgestellt, dass die Haftung einer erfindungsgemäßen Bedruckung auf Glas nochmals deutlich verbessert werden kann, wenn das Bedrucken innerhalb kurzer Zeit nach dem thermischen Vorspannen stattfindet. Vermutet wird, dass das thermische Vorspannen eine Oberflächenaktivierung bewirkt, an die die Bedruckung anbindet. In Rahmen der Erfindung findet das Aufbringen der dekorativen Bedruckung entsprechend t weniger als 1 Tag, bevorzugt weniger als 3 Stunden, höchst bevorzugt weniger als 1 Stunde nach dem Abschluss des thermischen Vorspannprozesses statt. Unter dem Abschluss des thermischen Vorspannprozesses ist dabei der Zeitpunkt zu verstehen, ab dem das Glas zumindest auf seiner Oberfläche auf unter 100 °C abgekühlt ist.

Bei Verwendung des erfindungsgemäßen Verfahrens oder einer dessen Weiterbildung kann unerwartet eine so gute Haftung der Bedruckung auf dem Dekorblendenrohling erzielt werden, dass sogar auf den Einsatz einer haftvermittelnden Schicht verzichtet werden kann. In einer weiteren bevorzugten Weiterbildung wird deshalb vor dem Aufbringen der dekorativen Bedruckung keine haftvermittelnde Schicht auf den Dekorblendenrohling aufgebracht.

In einer weiteren bevorzugten Weiterbildung wird als digitales Druckverfahren Tintenstrahldruck eingesetzt. Dieser ermöglicht das Aufbringen dekorativer und funktioneller Bedruckungen mit hoher Präzision und Flexibilität. Tintenstrahldruck ist durch die Verwendung geeigneter Druckköpfe gut skalierbar, sowohl bezüglich der Fläche des Substrats, der Druckgeschwindigkeit, als auch der Zahl an Farben und Materialien, die in einem Prozessschritt aufgebracht werden können. So kann ein Tintenstrahlverfahren beispielsweise quasi-kontinuierlich im Single-Pass-Verfahren arbeiten, bei dem der Druckkopf nur einmal die zu bedruckende Fläche abfährt, oder batch-basiert im Multi-Pass-Verfahren, bei dem der Druckkopf mehrmals die zu bedruckende Fläche abfährt und dabei zum Beispiel mehrere Farben oder mehrere Schichten aufbringt oder bei in den Druckkopf integrierten UV-Quellen mehrere Aushärtungsschritte erfolgen. Im Tintenstrahldruck können sowohl Lösungen, kolloidale Suspensionen, also Suspensionen, in denen die Feststoffpartikel zwischen 1 nm und 1 µm groß sind, als auch feine Suspensionen, in denen die Feststoffpartikel größer als 1 µm sind, verdruckt werden, solange diese eine ausreichend niedrige Viskosität aufweisen. In der Praxis bedeutet dies in der Regel eine Viskosität zwischen 1 mPa s und 500 mPa s. Die Viskosität lässt sich dabei beispielsweise mittels der Größe der gelösten beziehungsweise dispergierten Feststoffe, des Feststoffanteils, als auch durch die Wahl des Lösemittels beziehungsweise des Dispergiermittels einstellen. Beispiele für diese Materialklassenö sind in einem Lösemittel gelöste organische Farbstoffe (Lösung), in einer Flüssigkeit dispergierte Pigmente (kolloidale Suspension) oder Glasfritte enthaltende feine Suspensionen.
Bevorzugt wird der Tintenstrahldruck dabei als Mehrfarbdruck eingesetzt. Damit können verschiedene Mischfarben bis hin zu fotorealistischen Grafiken mit hoher Farbbrillanz in einem einzigen Prozessschritt aufgebracht werden. Im CMYK-Vierfarbdruck, der auf der subtraktiven Farbmischung von Cyan (C), Magenta (M), Gelb (Yellow, Y) und Schwarz (Key, K) beruht, lassen sich auf Glas allerdings nicht alle erforderlichen Farborte darstellen. Deshalb wird dieser in einer bevorzugten Weiterbildung des Verfahrens zusätzlich um Weiß (W), zum CMYKW-Fünffarbdruck, sowie optional zusätzliche Sonderfarben ergänzt. Solche Sonderfarben können beispielsweise zur Erweiterung des Gamuts dienen. Hierzu kommen Orange, Grün, helles Cyan oder helles Magenta in Frage. Auch zur Darstellung bestimmter definierter Volltonfarben, die im CMYKW-Farbmodell nicht exakt reproduziert werden können, können jeweils geeignete Sonderfarben zum Einsatz kommen.

In einer weiteren bevorzugten Weiterbildung werden die für die dekorative Bedruckung aufgebrachten Druckfarben durch Bestrahlung mit Licht, das Wellenlängen kleiner als 450 nm umfasst, ausgehärtet. Hierfür kommen bevorzugt Lösungen oder kolloidale Suspensionen zum Einsatz, die polymerisierbare oder quervernetzende Bestandteile sowie Photoinitiatoren beinhalten. Bevorzugt wird derartiges Licht durch wenigstens eine Leuchtdiode (LED) bereitgestellt. Es kann aber auch durch andere Lichtquellen, wie beispielsweise Quecksilberdampflampen oder Laserdioden, bereitgestellt werden.

Es hat sich dabei unerwartet gezeigt, dass das Vorgehen beim Aushärten einen zusätzlichen starken Einfluss auf die Haftung der Bedruckung auf dem Glas hat. Besteht die Bedruckung aus einer einzelnen Schicht, so hat sich ein vollständiges Aushärten der Bedruckung durch einmalige Bestrahlung für die Haftung als optimal erwiesen. Besteht die Bedruckung aus mehreren Schichten, so hat sich gezeigt, dass sowohl die Haftung der Bedruckung auf dem Glas als auch die Haftung der einzelnen Schichten untereinander deutlich verbessert werden konnte, indem bei der Aushärtung in einem ersten Schritt jede Schicht nach ihrem Aufbringen zunächst nur partiell ausgehärtet wurde und die vollständige Aushärtung nach dem Fertigstellen der letzten Schicht durch eine weitere Bestrahlung erfolgte. In einer weiteren bevorzugten Weiterbildung wird deshalb die Bedruckung entweder durch einmalige Bestrahlung vollständig ausgehärtet oder in einem ersten Schritt durch eine erste Bestrahlung nur partiell ausgehärtet, so dass weitere Schichten aufgedruckt werden können und in einem letzten Schritt durch eine weitere Bestrahlung dann alle Schichten der Bedruckung final ausgehärtet werden.

In einer weiteren bevorzugten Weiterbildung erfolgt nach dem Aufbringen der Bedruckung mittels eines digitalen Druckverfahrens wenigstens ein thermischer Nachbehandlungsschritt. Es hat sich überraschender Weise gezeigt, dass die Haftung der Bedruckung mit dem Substrat hierdurch weiter verbessert wird. Dies ist insbesondere für Druckfarben, die durch Bestrahlung mit Licht ausgehärtet werden, überraschend. Im Fall von elektrisch leitfähigen Schichten wurde hierdurch zusätzlich die Leitfähigkeit verbessert. Ein solch vorteilhafter Nachbehandlungsschritt erfolgt bei Temperaturen von weniger als 500°C. Bei höheren Temperaturen kann die thermische Vorspannung der Dekorblende wieder abgebaut werden kann. Bevorzugt sollte er bei Temperaturen von weniger als 350°C durchgeführt werden. In diesem Temperaturbereich ist sichergestellt, dass sich insbesondere die Vorspannung des Glases nicht abbaut und beispielsweise eine digital gedruckte leitfähige Schicht eine ausreichende elektrische Leitfähigkeit annehmen kann. Besonders bevorzugt sollte die Temperatur bei einer derartigen Nachbehandlung 150°C nicht überschreiten. Dies hat sich vor allem dann als notwendig erwiesen, wenn die Bedruckung temperaturempfindliche Bestandteile wie organische Moleküle enthält.

In einer weiteren bevorzugten Weiterbildung wird eine zusätzliche dekorative Bedruckung unter Verwendung von Glasfritte vor dem thermischen Vorspannen aufgebracht. Eine derartige Bedruckung kann mittels Tintenstrahldruck, Siebdruck oder Schablonendruck auf der Vorder- oder Rückseite des Dekorblendenrohlings aufgebracht werden. Der folgende Schritt des thermischen Vorspannens kann dann gleichzeitig zum Einbrennen der so aufgebrachten dekorativen Bedruckung auf der Oberfläche des Dekorblendenrohlings genutzt werden.

In einer weiteren bevorzugten Weiterbildung wird mittels Sieb- oder Schablonendruck, Rollercoating, Spraycoating oder Sputtern zumindest eine Effektschicht aus der Gruppe der Perlglanz-, Spiegel- oder Metall-Effekte auf der betrieblichen Vorder- oder Rückseite des Dekorblendenrohlings aufgebracht. Dieser Schritt erfolgt bevorzugt vor dem thermischen Vorspannen des Dekorblendenrohlings.

Mittels der im Stand der Technik bekannten Verfahren zur Herstellung einer Dekorblende, im speziellen mittels Siebdruck, ist es aus geometrischen Gründen nicht möglich in Vertiefungen eines Dekorblendenrohlings hinein zu drucken. Im Falle von Flachgläsern mit Aufwölbungen auf der zu bedruckenden Seite des Glases lassen sich ab einer gewissen Höhe der Aufwölbung sogar nur die Aufwölbungen, nicht aber die dazwischen liegenden Bereiche des Glases bedrucken. Da Digitaldruckverfahren wie Tintenstrahldruck oder Aerosoljetdruck kontaktlos arbeiten, also der Druckkopf nicht in Kontakt mit dem Flachglas ist, ist es damit nun möglich, auch in Vertiefungen hinein oder auf Zwischenräume zwischen Aufwölbungen zu drucken. In einer weiteren bevorzugten Weiterbildung der Erfindung, wird vor dem Schritt des thermischen Vorspannens wenigstens eine dekorative Bedruckung mittels Tintenstrahl- oder Tampondruck unter Verwendung von Glasfritte auf der Oberfläche wenigstens einer Vertiefung auf der betrieblichen Vorderseite des Dekorblendenrohlings aufgebracht, wobei die so aufgebrachte dekorative Bedruckung während dem thermischen Vorspannprozess auf der Oberfläche des Dekorblendenrohlings eingebrannt wird.

In einer weiteren bevorzugten Weiterbildung der Erfindung, wird nach dem Schritt des thermischen Vorspannens wenigstens eine dekorative Bedruckung mittels eines digitalen Druckverfahrens auf der Oberfläche wenigstens einer Vertiefung auf der betrieblichen Vorderseite des Dekorblendenrohlings aufgebracht.

In einer weiteren bevorzugten Weiterbildung, wird zusätzlich zu der dekorativen Bedruckung eine weitere dekorative Bedruckung oder funktionelle Schicht auf der betrieblichen Vorderseite des thermisch vorgespannten Dekorblendenrohlings aufgebracht. Bei der funktionellen Schicht kann es sich beispielsweise um eine entspiegelnde, eine kratzbeständige oder eine leicht zu reinigende Schicht handeln.

In einer weiteren bevorzugten Weiterbildung wird nach dem Aufbringen der dekorativen Bedruckung auf diese eine Schutzbeschichtung mittels Digitaldruck, Siebdruck, Walzenauftrag, Sprühbeschichtung, Schlitzguss oder ähnlichen Verfahren aufgebracht. Derartige Schutzbeschichtungen können beispielsweise die thermische oder chemische Degradation der Bedruckung reduzieren. Sie können vollflächig auf den Dekorblendenrohling aufgebracht werden, oder mit Aussparungen versehen sein, beispielsweise für Lichtquellen oder Displays, die hinter der Dekorblende in einem Haushaltsgerät montiert werden.

In einer weiteren bevorzugten Weiterbildung wird das erfindungsgemäße Verfahren um einen Schritt zum Aufbringen einer elektrisch leitfähigen Bedruckung nach dem Aufbringen zumindest einer ersten Schicht der dekorativen Bedruckung (4) ergänzt. Die Erfinder haben dabei herausgefunden, dass die aus dem Stand der Technik bekannten, Glasfritte enthaltenden Silberpasten hierfür nicht geeignet sind. Als geeignet hat sich dagegen Silber in Form dispergierter Nanopartikel, also Partikel mit einem Durchmesser von weniger als 1 µm oder in Form gelöster Silberkomplexe herausgestellt. Aus diesen Materialien hergestellte leitfähige Strukturen erfordern eine thermische Nachbehandlung, um den elektrischen Widerstand der Bedruckung zu minimieren. Damit wurden bei Temperaturen von weniger als 350°C beziehungsweise von weniger als 150°C ausreichend niedrige Widerstandswerte erreicht. Bevorzugt enthalten die Tinten zur Herstellung elektrisch leitfähiger Bedruckungen demnach keine Glasfritte.

Unter bestimmten Umständen kann es erforderlich sein, trotz der bereits beschriebenen Möglichkeiten, die Haftung weiter zu verbessern. Dies kann beispielsweise für Anwendungen mit sehr anspruchsvollen Anforderungen an die Haltbarkeit der Fall sein, oder wenn aus sonstigen Gründen bestimmte vorher diskutierte Verfahrensschritte nicht angewandt werden können. Dies gilt insbesondere, wenn sich das Aufbringen der Bedruckung nicht unmittelbar an das Vorspannen des Flachglases anschließen lässt. In einer weiteren bevorzugten Weiterbildung wird deshalb vor dem Aufbringen der dekorativen Bedruckung (4) eine haftvermittelnde Schicht (3) auf der betrieblichen Rückseite (12) des Dekorblendenrohlings (2) aufgebracht, vorzugsweise mittels eines digitalen Druckverfahrens. Eine solche Schicht kann entweder unter Verwendung anorganischer Materialien vor dem thermischen Vorspannen oder unter Verwendung organischer Materialien nach dem Vorspannen aufgebracht werden.

Gemäß einer weiteren bevorzugten Weiterbildung der Erfindung handelt es sich bei der Dekorblende (1) um eine Bedienblende oder eine äußere Türverglasung für elektronische Haushaltsgeräte. Bevorzugt handelt es sich bei diesen Haushaltsgeräten um ortsfeste elektronische Haushaltsgeräte wie beispielsweise Backöfen, Herde, Kühlschränke, Kaffeemaschinen, Mikrowellengeräte, Dampfgarer, Abzugshauben, Spülmaschinen, Waschmaschinen, Wäschetrockner, Geräte für Heizungsanlagen oder Kombinationsgeräte mit mehreren dieser Funktionalitäten wie beispielsweise Backöfen mit Mikrowellenfunktion oder kombinierte Waschtrockner, die Wäsche sowohl waschen als auch trocknen können.

Anhand eines in den Figuren dargestellten Ausführungsbeispiels einer erfindungsgemäß hergestellten Dekorblende wird die Erfindung näher beschrieben. Als Ausführungsbeispiel ist dabei eine dekorative Bedienblende für ein Haushaltsgerät gewählt.
Fig. 1 zeigt in einer schematischen Darstellung einen Querschnitt durch eine dekorative Bedienblende.
Fig. 2 zeigt eine Aufsicht auf die betriebliche Vorderseite einer dekorativen Bedienblende.

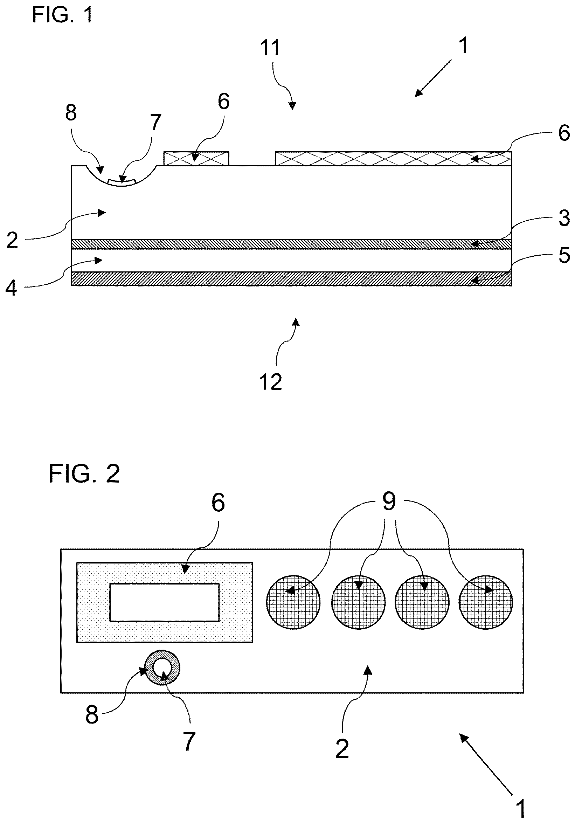

Die Figuren 1 und 2 zeigen eine Dekorblende (1), die eine betriebliche Vorderseite (11) sowie eine betriebliche Rückseite (12) aufweist und aus einem Dekorblendenrohling (2) hergestellt wurde. Auf der Rückseite (12) weist die dargestellte Dekorblende (1) eine haftvermittelnde Schicht (3), eine mittels eines digitalen Druckverfahrens hergestellte dekorative Bedruckung (4), sowie eine Schutzbeschichtung (5) auf.

Auf der Vorderseite (11) umfasst die Dekorblende (1) eine Vertiefung (8), eine in die Vertiefung hinein gedruckte dekorative Bedruckung (7) sowie eine weitere dekorative Bedruckung oder funktionelle Schicht (6), die eine Aussparung aufweist.

Weiterhin weist die Dekorblende (1) in Fig. 2 Bohrungen (9) durch die gesamte Dicke des Glases hindurch in Form von Durchgangsöffnungen auf.

Nachfolgend wird die Erfindung anhand weiterer Ausführungsbeispiele näher erläutert.

Beispiel 1: Zunächst wird eine 4 mm dicke Glasscheibe aus gefloatetem Kalk-Natron-Glas mit niedrigem Eisengehalt bereitgestellt. Diese Glasscheibe wird mittels Ritzen und Brechen mechanisch zugeschnitten. Zur Formung der gewünschten Außenkontur des Dekorblendenrohlings sowie eines C-Schliffs der Kanten wird die zugeschnittene Glasscheibe durch Schleifen bearbeitet. Im nächsten Schritt wird auf der betrieblichen Vorderseite des Dekorblendenrohlings mittels Schleifen und Polieren eine sphärische Vertiefung mit einem Durchmesser an der Oberfläche von 14 mm und einer Tiefe von 1 mm angefertigt. Hierbei wird die Zinn-Seite des Glases als Vorderseite ausgewählt. Anschließend wird mit einem Diamantbohrer eine zylindrische Durchführung mit einem Durchmesser von 50 mm in den Rohling gebohrt. Im Anschluss an diese formgebenden Verfahrensschritte, wird der Rohling gereinigt, um Rückstände von den Oberflächen des Rohlings zu beseitigen.

Der so geformte und gereinigte Rohling wird auf der Vorderseite mittels Siebdruck unter Verwendung von anorganischen Pigmenten und Glasfritte mit einem zweifarbigen Logo bedruckt. Dieser Druck wird zunächst in einem Ofen vorgetrocknet. Nach dem Trocknen der Bedruckung wird der Rohling in einem Vorspannofen thermisch vorgespannt, wobei das zweifarbige Logo auf der Vorderseite eingebrannt wird. Vor der Weiterverarbeitung des so vorgespannten Dekorblendenrohlings wird dieser auf eine Temperatur von weniger als 100 °C abgekühlt.

Im unmittelbaren Anschluss wird der vorgespannte Dekorblendenrohling auf einem Tintenstrahldrucker auf der betrieblichen Rückseite mit einer fotorealistischen Grafik bedruckt. Die Druckfarbe wird während dem Druckprozess auf dem Dekorblendenrohling mittels in den Druckkopf integrierter UV-LEDs ausgehärtet. Optional wird der Druck mit einer transparenten Schutzbeschichtung mit demselben Drucker flächendeckend beschichtet, um ihn vor mechanischen Beschädigungen zu schützen. Die Schutzbeschichtung wird ebenfalls mittels der UV-LEDs ausgehärtet.

Anschließend wird das Substrat gewendet und ein einfarbiges Piktogramm in die sphärische Vertiefung auf der betrieblichen Vorderseite gedruckt, wobei dieser Druck ebenfalls mittels der UV-LEDs ausgehärtet wird.

Beispiel 2: Der Dekorblendenrohling wird aus 3 mm dickem Kalk-Natron-Glas mittels mechanischem Zuschneiden, Schleifen, Reinigen und thermischem Vorspannen analog zu Beispiel 1 angefertigt.

Der vorgespannte und abgekühlte Dekorblendenrohling wird unmittelbar nach dem Abkühlen auf eine Temperatur von weniger als 100°C auf der betrieblichen Rückseite, die der Atmosphärenseite des Kalk-Natron-Glases entspricht, mittels eines Tintenstrahldruckers mit einem einfarbig schwarzen Druck bedruckt, der eine rechteckige Aussparung für ein Anzeigegerät sowie weitere Aussparungen in Form von Piktogrammen aufweist, die im eingebauten Zustand, beispielsweise als Bedienblende eingebaut in einen Backofen, von der betrieblichen Rückseite her mit Leuchtmitteln hinterleuchtet werden können. Optional werden um die Aussparungen herum oder zumindest an eine Seite der Aussparungen elektrisch leitfähige Strukturen aus Silber unter Verwendung einer nanopartikulären Tinte mittels Tintenstrahldruck aufgebracht. Diese Silberstrukturen werden in einem Ofen thermisch getrocknet und erreichen damit einen spezifischen elektrischen Widerstand von weniger als 250 µOhm cm. Sie können beispielsweise als Sensoren für kapazitive Berührungssensoren verwendet werden.

Beispiel 3: Das Verfahren zur Anfertigung des Beispiels 3 entspricht dem in Beispiel 2 genannten, wobei vor dem Aufbringen des einfarbigen schwarzen Drucks mittels desselben Tintenstrahldruckers eine transparente haftvermittelnde Bedruckung aufgebracht wird.

Es ist dem Fachmann ersichtlich, dass die Erfindung nicht auf die vorstehend anhand der Figuren beschriebenen lediglich beispielhaften Ausführungsformen beschränkt ist, sondern in vielfältiger Weise im Rahmen des Gegenstandes der Patentansprüche variiert werden kann. Insbesondere können auch die Merkmale einzelner Ausführungsbeispiele miteinander kombiniert werden. Zusätzlich können in vorteilhafter Weise einzelne Prozessschritte des erfindungsgemäßen Verfahrens mehrmals hintereinander durchlaufen werden oder um weitere Prozessschritte vor, zwischen oder nach den erfindungsgemäß benötigten Schritten ergänzt werden.

## Patentansprüche

1. Verfahren zum Herstellen einer Dekorblende (1) für elektronische Haushaltsgeräte, die eine betriebliche Vorderseite (11) sowie eine betriebliche Rückseite (12) aufweist, wobei die betriebliche Vorderseite die im eingebauten Zustand außenliegende Seite und die betriebliche Rückseite die im eingebauten Zustand innenliegende Seite ist, welches zumindest die folgenden Schritte in der angegebenen Reihenfolge umfasst:
- Bereitstellen eines Flachglases aus Kalk-Natron-Glas mit einer Dicke von mindestens 2 mm bis 8 mm;
- Herstellen eines Dekorblendenrohlings (2) durch formgebende Bearbeitung des bereitgestellten Flachglases mit wenigstens einem der Schritte: Formen der Außenkontur der Dekorblende, Bearbeitung der Kanten und/oder Anfertigen wenigstens einer Vertiefung (8) auf der betrieblichen Vorderseite (11);
- Thermisches Vorspannen des hergestellten Dekorblendenrohlings (2);
- Aufbringen wenigstens einer dekorativen Bedruckung (4) auf der betrieblichen Rückseite (12) des thermisch vorgespannten Dekorblendenrohlings (2) mittels eines digitalen Druckverfahrens, wobei die Bedruckung (4) weniger als 1 Tag nach Abschluss des thermischen Vorspannprozesses aufgebracht wird.

2. Verfahren nach Anspruch 1, wobei das bereitgestellte Flachglas eine Dicke von mindestens 3 mm bis 6 mm aufweist.

3. Verfahren nach Anspruch 1 oder Anspruch 2, wobei die Bedruckung (4) weniger als 3 Stunden, bevorzugt weniger als 1 Stunde nach Abschluss des thermischen Vorspannprozesses aufgebracht wird.

4. Verfahren nach einem der vorhergehenden Ansprüche, wobei vor dem Aufbringen der dekorativen Bedruckung (4) keine haftvermittelnde Schicht (3) auf den Dekorblendenrohling (2) aufgebracht wird.

5. Verfahren nach einem der vorhergehenden Ansprüche, wobei als digitales Druckverfahren Tintenstrahldruck, bevorzugt ausgeprägt als CMYKW-Fünffarbdruck, besonders bevorzugt ausgeprägt als CMYKW-Fünffarbdruck erweitert um wenigstens eine Sonderfarbe, verwendet wird.

6. Verfahren nach einem der vorhergehenden Ansprüche, wobei die aufgebrachten Druckfarben durch Bestrahlung mit Licht, das Wellenlängen kleiner als 450 nm umfasst, ausgehärtet werden, bevorzugt unter Verwendung wenigstens einer LED als Lichtquelle.

7. Verfahren nach einem der vorhergehenden Ansprüche, wobei nach dem Aufbringen der Bedruckung (4) ein thermischer Nachbehandlungsschritt erfolgt, bei einer Temperatur von weniger als 500°C, bevorzugt weniger als 350°C, besonders bevorzugt weniger als 150°C.

8. Verfahren nach einem der vorhergehenden Ansprüche, **dadurch gekennzeichnet, dass** wenigstens eine weitere dekorative Bedruckung vor dem thermischen Vorspannen des Dekorblendenrohlings (2) mittels Tintenstrahldruck, Siebdruck oder Schablonendruck unter Verwendung von Glasfritte auf der betrieblichen Vorder- (11) oder Rückseite (12) aufgebracht wird, wobei die so aufgebrachte dekorative Bedruckung während dem thermischen Vorspannprozess auf der Oberfläche des Dekorblendenrohlings (2) eingebrannt wird.

9. Verfahren nach einem der vorhergehenden Ansprüche, **dadurch gekennzeichnet, dass** wenigstens eine Effektschicht aus der Gruppe der Perlglanz-, Spiegel- oder Metall-Effekte mittels Sieb- oder Schablonendruck, Rollercoating, Spraycoating oder Sputtern auf der betrieblichen Vorder- (11) oder Rückseite (12) aufgebracht wird.

10. Verfahren nach einem der vorhergehenden Ansprüche, **dadurch gekennzeichnet, dass** wenigstens eine dekorative Bedruckung (7) vor dem thermischen Vorspannen des Dekorblendenrohlings (2) mittels Tintenstrahldruck oder Tampondruck unter Verwendung von Glasfritte auf der Oberfläche wenigstens einer Vertiefung (8) auf der betrieblichen Vorderseite (11) aufgebracht wird, wobei die so aufgebrachte dekorative Bedruckung (7) während dem thermischen Vorspannprozess auf der Oberfläche des Dekorblendenrohlings eingebrannt wird.

11. Verfahren nach einem der vorhergehenden Ansprüche, wobei wenigstens eine weitere dekorative Bedruckung oder funktionelle Schicht (6) auf der betrieblichen Vorderseite (11) des thermisch vorgespannten Dekorblendenrohlings aufgebracht wird.

12. Verfahren nach einem der vorhergehenden Ansprüche, wobei wenigstens eine dekorative Bedruckung (7) mittels eines digitalen Druckverfahrens in wenigstens eine Vertiefung (8) auf der betrieblichen Vorderseite (11) des thermisch vorgespannten Dekorblendenrohlings (2) aufgebracht wird.

13. Verfahren nach einem der vorhergehenden Ansprüche, **dadurch gekennzeichnet, dass** nach dem Aufbringen der Bedruckung (4) auf diese Bedruckung (4) eine Schutzbeschichtung (5) mittels Digitaldruck, Siebdruck, Walzenauftrag, Sprühbeschichtung oder Schlitzguss aufgetragen wird.

14. Verfahren nach einem der vorhergehenden Ansprüche, wobei nach dem Aufbringen der dekorativen Bedruckung (4) eine elektrisch leitfähige Bedruckung aufgebracht wird.

15. Verfahren nach einem der vorhergehenden Ansprüche, wobei vor dem Aufbringen der Bedruckung (4), eine haftvermittelnde Schicht (3) auf der betrieblichen Rückseite (12) aufgebracht wird, bevorzugt mittels eines digitalen Druckverfahrens.

16. Verfahren nach einem der vorhergehenden Ansprüche, wobei die Dekorblende (1) eine Bedienblende oder äußere Türverglasung für elektronische Haushaltsgeräte, bevorzugt für ortsfeste elektronische Haushaltsgeräte, besonders bevorzugt für Backöfen, Herde, Kühlschränke, Kaffeemaschinen, Mikrowellengeräte, Dampfgarer, Abzugshauben, Spülmaschinen, Waschmaschinen, Wäschetrockner, Geräte für Heizungsanlagen oder Kombinationsgeräte mit mehreren dieser Funktionalitäten ist.

## Claims

1. A method for producing a decorative panel (1) for electronic household appliances, having an operational front face (11) and an operational rear face (12), the operational front face being the outer surface in the installed state and the operating rear face being the inner surface in the installed state, comprising at least the following steps in the given order:
- providing a flat glass made of soda-lime glass with a thickness of at least 2 mm to 8 mm;
- producing a decorative panel blank (2) by shaping processes on the provided flat glass, comprising at least one of the steps of: shaping the outer contour of the decorative panel, processing the edges, and/or producing at least one recess (8) on the operational front face (11);
- thermally toughening the produced decorative panel blank (2);
- applying at least one decorative print (4) on the operational rear face (12) of the thermally toughened decorative panel blank (2) by a digital printing process, wherein the print (4) is applied less than 1 day after completion of the thermal toughening process.

2. The method according to claim 1, wherein the provided flat glass has a thickness of at least 3 mm to 6 mm.

3. The method according to claim 1 or claim 2, wherein the print (4) is applied less than 3 hours, preferably less than 1 hour after completion of the thermal toughening process.

4. The method according to any one of the preceding claims, wherein no adhesion-promoting layer (3) is applied to the decorative panel blank (2) before applying the decorative print (4).

5. The method according to any one of the preceding claims, wherein the digital print process used is inkjet printing, preferably in the form of five-colour CMYKW printing, particularly preferably implemented as five-colour CMYKW printing expanded by at least one special colour.

6. The method according to any one of the preceding claims, wherein the applied printing inks are cured by irradiation with light having wavelengths of less than 450 nm, preferably using at least one LED as a light source.

7. The method according to any one of the preceding claims, wherein, after application of the print (4), a thermal post-treatment step is performed at a temperature of less than 500 °C, preferably less than 350 °C, most preferably less than 150 °C.

8. The method according to any one of the preceding claims, **characterised in that**, prior to the thermal toughening of the decorative panel blank (2), at least one further decorative print is applied onto the operational front face (11) or rear face (12) by inkjet printing, screen printing, or stencil printing using glass frit, wherein the so applied decorative print is baked into the surface of the decorative panel blank (2) during the thermal toughening process.

9. The method according to any one of the preceding claims, **characterised in that** at least one effect layer from the group of pearlescent, mirror, or metal effects is applied onto the operational front face (11) or rear face (12) by screen printing or stencil printing, roller coating, spray coating, or sputter coating,

10. The method according to any one of the preceding claims, **characterised in that**, prior to the thermal toughening of the decorative panel blank (2), at least one decorative print (7) is applied onto the surface of at least one depression (8) on the operational front face (11) by inkjet printing or pad printing using glass frit, wherein the so applied decorative print (7) is baked into the surface of the decorative panel blank during the thermal toughening process.

11. The method according to any one of the preceding claims, wherein at least one further decorative print or functional layer (6) is applied onto the operational front face (11) of the thermally toughened decorative panel blank.

12. The method according to any one of the preceding claims, wherein at least one decorative print (7) is applied in at least one recess (8) on the operational front face (11) of the thermally toughened decorative panel blank (2) by a digital printing process.

13. The method according to any one of the preceding claims, **characterised in that**, after application of the print (4), a protective coating (5) is applied on this print (4) by digital printing, screen printing, roller coating, spray coating, or slot-die coating.

14. The method according to any one of the preceding claims, wherein an electrically conductive print is applied after the application of the decorative print (4).

15. The method according to any one of the preceding claims, wherein, prior to applying the print (4), an adhesion-promoting layer (3) is applied onto the operational rear face (12), preferably by a digital printing process.

16. The method according to any one of the preceding claims, wherein the decorative panel (1) is a control panel or outer door glazing for electronic household appliances, preferably for stationary electronic household appliances, particularly preferably for baking ovens, cookers, refrigerators, coffee machines, microwave ovens, steamers, extractor hoods, dishwashers, washing machines, tumble dryers, devices for heating systems, or combination devices with several of these functionalities.

## Revendications

1. Procédé de fabrication d'un panneau décoratif (1) qui est destiné à des appareils ménagers électroniques et présente une face avant (11) de service ainsi qu'une face arrière (12) de service, la face avant de service constituant la face externe à l'état monté, et la face arrière constituant la face interne à l'état monté, ledit procédé comprenant au moins les étapes suivantes, dans l'ordre indiqué :
- mise en place d'un verre plat constitué de verre sodocalcique d'une épaisseur d'au moins 2 mm à 8 mm ;
- réalisation d'une ébauche de panneau décoratif (2) par façonnage du verre plat mis en place, comprenant au moins l'une des étapes suivantes : mise en forme du contour extérieur du panneau décoratif, usinage des arêtes et/ou réalisation d'au moins un creux (8) sur la face avant (11) de service ;
- mise sous précontrainte thermique de l'ébauche de panneau décoratif (2) réalisé ;
- application d'au moins une impression décorative (4) sur la face arrière (12) de service de l'ébauche de panneau décoratif (2) mise sous précontrainte thermique, à l'aide d'un procédé d'impression numérique, l'impression (4) étant appliquée moins de 1 jour après la fin du processus de précontrainte thermique.

2. Procédé selon la revendication 1, selon lequel le verre plat mis en place présente une épaisseur d'au moins 3 mm à 6 mm.

3. Procédé selon la revendication 1 ou la revendication 2, selon lequel l'impression (4) est appliquée moins de 3 heures, de préférence moins de 1 heure, après la fin du processus de précontrainte thermique.

4. Procédé selon l'une des revendications précédentes, selon lequel l'application de l'impression décorative (4) n'est pas précédée de l'application d'une couche (3) favorisant l'adhérence, sur l'ébauche de panneau décoratif (2).

5. Procédé selon l'une des revendications précédentes, selon lequel on utilise, en tant que procédé d'impression numérique, l'impression à jet d'encre, de préférence sous forme d'impression en cinq couleurs CMYKW, et de façon particulièrement avantageuse sous forme d'impression CMYKW augmentée d'au moins une couleur spéciale

6. Procédé selon l'une des revendications précédentes, selon lequel les encres d'impression appliquées sont durcies par irradiation avec de la lumière ayant des longueurs d'ondes inférieures à 450 nm, de préférence en utilisant au moins une DEL en tant que source lumineuse.

7. Procédé selon l'une des revendications précédentes, selon lequel l'application de l'impression (4) est suivie d'une étape de post-traitement thermique qui est exécutée à une température inférieure à 500 °C, de préférence inférieure à 350°C, et de façon particulièrement avantageuse inférieure à 150°C.

8. Procédé selon l'une des revendications précédentes, **caractérisé en ce qu'**au moins une impression décorative supplémentaire est appliquée avant la précontrainte thermique de l'ébauche de panneau décoratif (2), par impression à jet d'encre, impression par sérigraphie ou impression au pochoir, en utilisant de la fritte de verre sur la face avant (11) ou la face arrière (12) de service, sachant que pendant le processus de précontrainte thermique, l'impression décorative ainsi appliquée est soumise à une cuisson sur la surface de l'ébauche de panneau décoratif (2).

9. Procédé selon l'une des revendications précédentes, **caractérisé en ce qu'**au moins une couche à effet, appartenant au groupe des effets nacrés, réfléchissants ou métalliques, est déposée par impression par sérigraphie ou au pochoir, par application au rouleau, par application par pulvérisation ou par pulvérisation cathodique sur la face avant (11) ou la face arrière (12) de service.

10. Procédé selon l'une des revendications précédentes, **caractérisé en ce qu'**avant la précontrainte thermique de l'ébauche de panneau décoratif (2), au moins une impression décorative (7) est appliquée par impression à jet d'encre ou par impression au tampon, en utilisant de la fritte de verre sur la surface d'au moins un creux (8) sur la face avant (11) de service, sachant que pendant le processus de précontrainte thermique, l'impression décorative (7) ainsi appliquée est soumise à une cuisson sur la surface de l'ébauche de panneau décoratif.

11. Procédé selon l'une des revendications précédentes, selon lequel au moins une impression décorative ou couche fonctionnelle (6) supplémentaire est appliquée sur la face avant (11) de service de l'ébauche de panneau décoratif ayant subi une précontrainte thermique.

12. Procédé selon l'une des revendications précédentes, selon lequel au moins une impression décorative (7) est appliquée à l'aide d'un procédé d'impression numérique, dans au moins un creux (8) sur la face avant (11) de service de l'ébauche de panneau décoratif (2) ayant subi une précontrainte thermique.

13. Procédé selon l'une des revendications précédentes, **caractérisé en ce qu'**après l'application de l'impression (4), un revêtement de protection (5) est déposé sur cette impression (4), par impression numérique, impression par sérigraphie, application au rouleau, application par pulvérisation ou coulée à fente.

14. Procédé selon l'une des revendications précédentes, selon lequel l'application de l'impression décorative (4) est suivie de l'application d'une impression électriquement conductrice.

15. Procédé selon l'une des revendications précédentes, selon lequel l'application de l'impression (4) est précédée du dépôt d'une couche (3) favorisant l'adhérence, sur la face arrière (12) de service, de préférence à l'aide d'un procédé d'impression numérique.

16. Procédé selon l'une des revendications précédentes, selon lequel le panneau décoratif (1) est un panneau de commande ou le vitrage extérieur d'une porte destiné à des appareils ménagers électroniques, de préférence à des appareils ménagers électroniques fixes, et de façon particulièrement avantageuse à des fours, des cuisinières, des réfrigérateurs, des machines à café, des fours à micro-ondes, des cuiseurs à vapeur, des hottes aspirantes, des lave-vaisselle, des lave-linge, des sèche-linge, des appareils destinés à des installations de chauffage ou des appareils combinés présentant plusieurs de ces fonctionnalités.
